# EUROPEAN PATENT APPLICATION

(11) **EP 2 716 811 A1**
(43) Date of publication of application: **09.04.2014**
(21) Application number: 12187377.2
(22) Date of filing: 05.10.2012
(51) Int. Cl.: D06F 58/28

(54) **A method for controlling the rotation speed of a laundry drum in a laundry dryer and a corresponding laundry dryer**

(71) Applicant: Electrolux Home Products Corporation N.V., 1130 Brussel (BE)
(72) Inventor: Bison, Alberto, 33080 Porcia (PN) (IT); Cavarretta, Francesco, 33080 Porcia (PN) (IT); Ugel, Maurizio, 33080 Porcia (PN) (IT); Vignocchi, Massimiliano, 33080 Porcia (PN) (IT)
(74) Representative: Nardoni, Andrea

(57) **Abstract**

The present invention relates to a method for controlling the rotation speed (v) of a laundry drum (10) in a laundry dryer (10). The method comprises the steps of determining an amount of load (l) in the laundry drum (12); and controlling the rotation speed (v) of the laundry drum (16) in dependence of the detected and/or estimated amount of load (l) in said laundry drum (12), so that in case of a first amount of load (l) the rotation speed (v) of the laundry drum (10) is set to a first rotation speed (v1) and in case of a second amount of load (l) the rotation speed (v) of the laundry drum (10) is set to a second rotation speed (v2),
wherein the first amount of load (l) is smaller than the second amount of load (1) and the first rotation speed (v1) is higher than the second rotation speed (v2). Further, the present invention relates to a corresponding laundry dryer.

## Description

The present invention relates to a method for controlling the rotation speed of a laundry drum in a laundry dryer. Further, the present invention relates to a corresponding laundry dryer.

The rotation speed of a laundry drum in a laundry dryer is usually substantially constant during the drying cycle. The rotation speed is usually set to optimize the drying performance. For example, if the optimal speed is about 55 rpm, then the laundry being agitated during the drying phase are optimally dried by the hot and dry air stream. In fact, at such a rotation speed the laundry is can be risen up to the top of the laundry drum 10 and then fall down and passes through a hot dry air stream flowing into the laundry drum 10 from an air stream channel.

In case of some special textiles the rotation speed of the laundry drum may be set by a control unit of the laundry dryer to a different value according to a program selected by the user. For example, in a wool cycle the rotation speed is fixed at a higher value in order to stuck the laundry around the wall of the laundry drum, so that damages to the laundry are avoided.

It is an object of the present invention to provide a method for controlling the rotation speed of a laundry drum in a laundry dryer, wherein said method avoids unnecessary energy consumption. It is further an object of the present invention to provide a corresponding laundry dryer.

The object of the present invention is achieved by the method according to claim 1.

The method for controlling the rotation speed of a laundry drum in a laundry dryer according to the present invention comprises the steps of:
- determining an amount of load in the laundry drum,
- controlling the rotation speed of the laundry drum in dependence of the detected and/or estimated amount of load in said laundry drum,
- so that in case of a first amount of load the rotation speed of the laundry drum is set to a first rotation speed and in case of a second amount of load the rotation speed Of the laundry drum is set to a second rotation speed,
- wherein the first amount of load is smaller than the second amount of load and the first rotation speed is higher than the second rotation speed.

Determining an amount of load in the laundry drum includes detecting and/or estimating the amount of load by evaluating predetermined working parameter of the laundry dryer. Further, determining an amount of load in the laundry drum includes receiving information about the amount of load via a user's imputing data or a user's selecting drying cycles or related parameter.

Preferably, the determining an amount of load in the laundry drum occurs at the beginning of the drying cycle.

The main idea of the present invention is the correlation between the rotation speed of the laundry drum and the amount of load in said laundry drum. The rotation speed of the laundry drum decreases with an increasing amount of load in said laundry drum. Preferably, a maximum rotation speed is ensured, if the load falls below the value of predetermined reduced load. Preferably, in a similar way, a minimum rotation speed is ensured, if the load exceeds the value of the maximum load. For the maximum load in the laundry drum the lower rotation speed is sufficient and does not reduce the drying efficiency and saves a substantial amount of energy, since the power of a motor driving the laundry drum is also lower.

Further, at least one predetermined threshold value for the amount of load may be defined, wherein above said threshold value the rotation speed of the laundry drum is set to the second rotation speed and below said threshold value the rotation speed of the laundry drum is set to the first rotation speed.

Moreover, a predetermined first threshold value and second threshold value may be defined, wherein the rotation speed of the laundry drum is set to the first rotation speed, if the amount of load is equal as or smaller than the first threshold value, and wherein the rotation speed of the laundry drum is set to the second rotation speed, if the amount of load is equal as or bigger than the second threshold value.

In this case, if the amount of load is between the first threshold value and the second threshold value, then the rotation speed of the laundry drum is a defined function of the amount of load, wherein the rotation speed decreases with an increasing amount of load.

Moreover, a predetermined first threshold value and second threshold value may be defined, wherein if the amount of load is between the first threshold value and the second threshold value, then rotation speed decreases with an increasing amount of load.

Preferably, the rotation speed decreases linearly with an increasing amount of load according to the defined function. In general, arbitrary suitable functions may be used for defining the correlation between the activated rotation speed and the amount of load.

Further, the current rotation speed of the laundry drum oscillates around the value of the activated rotation speed.

Alternatively, the current rotation speed of the laundry drum oscillates between zero and the value of the activated rotation speed.

Additionally, the laundry drum changes periodically its direction of rotation during the drying cycle.

Preferably, the upper rotation speed is between 45 rpm and 65 rpm, in particular 55 rpm.

Further, the lower rotation speed is between 10 rpm and 30 rpm, in particular 20 rpm.

The object of the present invention is also achieved by the laundry dryer according to claim 10.

The present invention relates to a laundry dryer with a rotating laundry drum, wherein:
- the laundry dryer comprises a detection device for detecting an amount of load inside the laundry drum or for detecting one or more parameters correlating with the amount of load inside the laundry drum,
- the laundry dryer comprises a control unit for estimating the amount of load inside the laundry drum,
- the control unit is provided for controlling a rotation speed of the laundry drum in dependence of the amount of load inside the laundry drum,
- so that in case of a first amount of load the rotation speed of the laundry drum is set to a first rotation speed and in case of a second amount of load the rotation speed of the laundry drum is set to a second rotation speed,
- wherein the first amount of load is smaller than the second amount of load and the first rotation speed is higher than the second rotation speed.

The core of the present invention is that the rotation speed of the laundry drum decreases with an increasing amount of load in said laundry drum. Preferably, a maximum rotation speed is ensured, if the load falls below the value of predetermined reduced load. Preferably, in a similar way, a minimum rotation speed is ensured, if the load exceeds the value of the maximum load. For the maximum load in the laundry drum the lower rotation speed is sufficient and does not reduce the drying efficiency and saves a substantial amount of energy.

Further, the detection device may comprise a user interface connected to the control unit, wherein said user interface is provided for selecting the amount of load by the user or for imputing parameter associated to the amount of load, for example the drying cycle, by the user.

For example, the detection device comprises a conductimet-ric system including at least two electrodes inside the laundry drum, wherein said electrodes are provided for detecting the electric resistance and/or conductivity of wet laundry. In this case, the control unit may be provided for estimating the amount of load from the electric resistance and/or conductivity of the wet laundry.

Moreover, the control unit may be provided for controlling a rotation speed of an air stream fan. The control unit may be also provided for controlling the rotation speeds of the air stream fan and the laundry drum, if the air stream fan and the laundry drum are driven by separate motors.

Preferably, the laundry dryer comprises a heat pump system. Alternatively, the laundry dryer comprises an air-to-air heat exchanger thermally connected to an air stream circuit of the laundry dryer.

At last, the laundry dryer is provided for the method mentioned above.

The novel and inventive features believed to be the characteristic of the present invention are set forth in the appended claims.

The invention will be described in further detail with reference to the drawings, in which
- FIG 1: illustrates a schematic diagram of two rotation speeds of a laundry drum in a laundry dryer according to a preferred embodiment of the present invention,
- FIG 2: illustrates a schematic diagram of a first example of the correlation between the rotation speed and an amount of load in the laundry drum of the laundry dryer according to the present invention,
- FIG 3: illustrates a schematic diagram of a second example of the correlation between the rotation speed and an amount of load in the laundry drum of the laundry dryer according to the present invention,
- FIG 4: illustrates a schematic diagram of a third example of the correlation between the rotation speed and an amount of load in the laundry drum of the laundry dryer according to the present invention,
- FIG 5: illustrates a schematic diagram of a first embodiment of the laundry dryer with an air-to-air condenser according to the present invention,
- FIG 6: illustrates a schematic diagram of a first embodiment of the laundry dryer with a heat pump system according to the present invention,
- FIG 7: illustrates a schematic diagram of a second embodiment of the laundry dryer with the air-to-air condenser according to the present invention, and
- FIG 8: illustrates a schematic diagram of a second embodiment of the laundry dryer with the heat pump system according to the present invention.

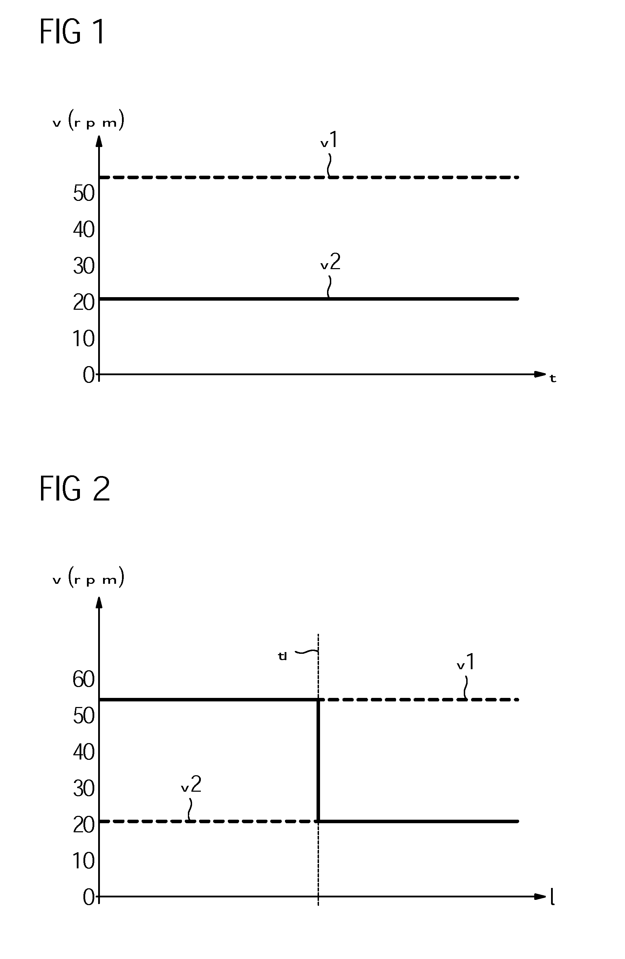

FIG 1 illustrates a schematic diagram of two rotation speeds v1 and v2 of a laundry drum 10 in a laundry dryer according to a preferred embodiment of the present invention.

An upper rotation speed v1 is provided for the laundry drum 10 with a reduced load of laundry. For example, the reduced load of laundry is the half of a maximum load of laundry. In this example, the upper rotation speed v1 is about 55 rpm. A lower rotation speed v2 is provided for the laundry drum 10 with a maximum load of laundry. In this example, the lower rotation speed v2 is about 20 rpm.

When the laundry drum 10 is loaded with the reduced load, for example a half of the maximum load, then the laundry being dried have a lot of space inside said laundry drum 10. While the laundry drum 10 is rotating, the laundry can move or change its position inside the laundry drum 10. Under this conditions it is important that the centrifugal force transmitted by the rotation of the laundry drum 10 to the laundry does not exceed the gravity force, so that the laundry can be risen up to the top of the laundry drum 10 and then fall down and passes through a hot dry air stream flowing into the laundry drum 10 from an air stream channel. Under this condition the optimal upper speed v1 is about 55 rpm, if the laundry drum 10 is loaded by the half of the maximum load.

When the laundry drum 10 is loaded with the full or maximum load, then there is low available space for the laundry inside the laundry drum 10, so that the movement due to the net gravity force is almost zero. The laundry almost does not move or change its position inside the laundry drum 10. Thus, the laundry and the laundry drum 10 rotate as a substantially unique body. In this situation the upper rotation speed v1 at 55 rpm would be a source for inefficient energy consumption. The lower rotation speed v2 at 20 rpm does not reduce the drying efficiency and saves a substantial amount of energy, since the power of a motor 20 or 42 driving the laundry drum 10 at the lower speed v2 is also lower.

The upper rotation speed v1 and the lower rotation speed v2 in FIG 1 are constant. Alternatively, the rotation speeds v1 and v2 can vary between a predetermined maximum speed and zero in each case. Further, the laundry drum 10 may rotate alternatingly clockwise and counter-clockwise for a more efficient drying of the laundry. Moreover, the rotation speed oscillates around an average rotation speed, wherein changes of the rotation direction are also possible.

According to the present invention the rotation speed v of the laundry drum 10 depends on the amount of load 1 in said laundry drum 10. The rotation speed v of the laundry drum 10 decreases with an increasing amount of load 1 in said laundry drum 10.

FIG 2 illustrates a schematic diagram of a first example of the correlation between the rotation speed v and the amount of load 1 in the laundry drum 10 of the laundry dryer according to the present invention.

The idea of the present invention is to set the rotation speed v of the laundry drum 10 according to the amount of load 1 being dried. When the load 1 in the laundry drum 10 is lower than a predetermined threshold value tl, then the upper rotation speed v1 is activated. In contrast, when the load 1 in the laundry drum 10 is higher than the threshold value tl, then the lower rotation speed v2 is activated. For example, the threshold value tl may correspond with the half of the maximum load in the laundry drum 10.

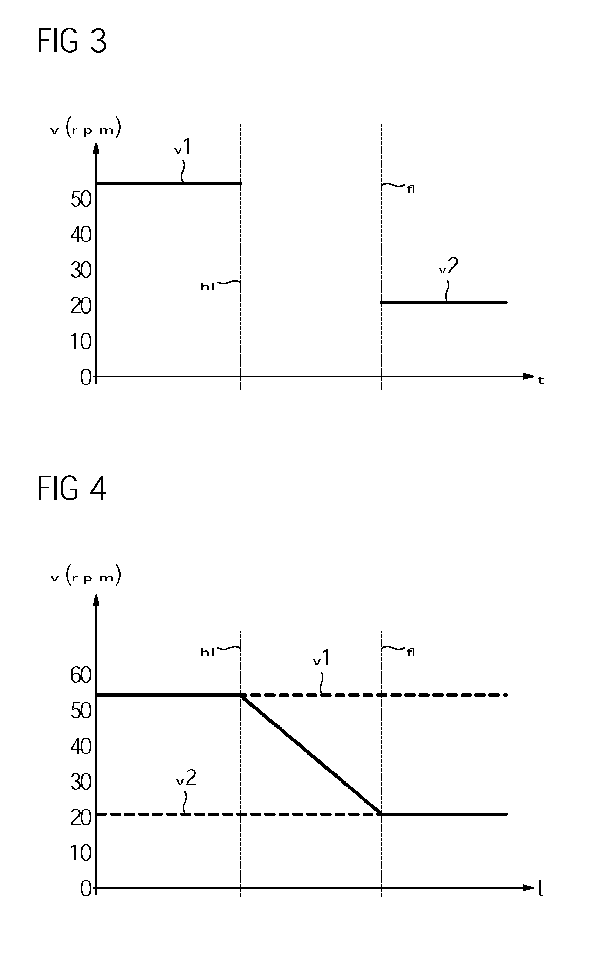

FIG 3 illustrates a schematic diagram of a second example of the correlation between the rotation speed v and the amount of load 1 in the laundry drum 10 of the laundry dryer according to the present invention.

According to the present invention the rotation speed v of the laundry drum 10 is set according to the amount of load 1 being dried. When the load 1 in the laundry drum 10 is equal as or lower than a first threshold value hl, e.g. the half load of the maximum load, then the upper rotation speed v1 is activated. In contrast, when the load 1 in the laundry drum 10 is equal as a second threshold value fl, e.g. the full load or overloaded, then the lower rotation speed v2 is activated.

FIG 4 illustrates a schematic diagram of a third example of the correlation between the rotation speed v and the amount of load 1 in the laundry drum 10 of the laundry dryer according to the present invention.

The idea of the present invention is to set the rotation speed v of the laundry drum 10 according to the amount of load 1 being dried. When the load 1 in the laundry drum 10 is equal as or lower than the half load hl of the maximum load, then the upper rotation speed v1 is activated. In contrast, when the load 1 in the laundry drum 10 is equal as the full load fl or overloaded, then the lower rotation speed v2 is activated. In the intermediate portion between the half load hl and the full load fl, the rotation speed v decreases linearly with the increasing load l.

In general, within the intermediate portion between the first threshold value hl and the second first threshold value fl, the rotation speed v decreases linearly, or substantially linearly, with the increasing load l.

The following table shows an example of the correlation between the rotation speed v and the amount of load 1 in the laundry drum 10:

| load l: | rotation speed v: |
|---|---|
| Less than 4.0 kg | 55 rpm |
| 4.0 kg to 4.6 kg | 50 rpm |
| 4.6 kg to 5.3 kg | 45 rpm |
| 5.3 kg to 6.0 kg | 40 rpm |
| 6.0 kg to 6.6 kg | 35 rpm |
| 6.6 kg to 7.3 kg | 30 rpm |
| 7.3 kg to 8.0 kg | 25 rpm |
| more than 8.0 kg | 20 rpm |

The table corresponds substantially with the diagram shown in FIG 4.

The optimal rotation speed v of the laundry drum 10 is set according to the table above and/or the diagram in FIG 4. The correlation between the rotation speed v of the laundry drum 10 and the amount of load 1 inside the laundry drum 10 is stored as a function or as a table in a memory of a control unit 26. According to this function or table, every amount of load 1 in the laundry drum 10 is related to an ideal rotation speed of said laundry drum 10.

The laundry dryer may comprise a single motor 20 driving both the laundry drum 10 and an air steam fan 18. Further, the laundry dryer may comprise two motors, i.e. a fan motor 40 for driving the air stream fan 18 and a drum motor 42 for driving the laundry drum 10. The laundry dryer with the fan motor 40 and the drum motor 42 allows better results in view of optimizing the drying cycle, since the rotation speed of the air stream fan 18 may be maintained or varied independent of the rotation speed v of the laundry drum 10.

Preferably, at the beginning of the drying cycle the load 1 in the laundry drum 10 is detected and/or estimated. The load 1 in the laundry drum 10 may be directly input or selected by the user via a user interface 28 of the laundry dryer. In a similar way, the load 1 may be indirectly set by selecting a specific drying cycle by the user via said user interface 28 of the laundry dryer, wherein said specific drying cycle is associated with a predetermined amount of load l. A detection device for detecting the amount of load inside the laundry drum comprise the user interface 28

Further, the amount of load 1 in the laundry drum 10 may be detected by a weight sensor. Moreover, the amount of load 1 may be estimated by measuring the electric resistance and/or conductivity of the wet laundry. Another method for determining the amount of load 1 in the laundry drum 10 is the detection of the absorbed power or current of the drum motor 20 or 42. The information of the torque generated by the drum motor 20 or 42 allows also the estimation of the load 1 in the laundry drum 10.

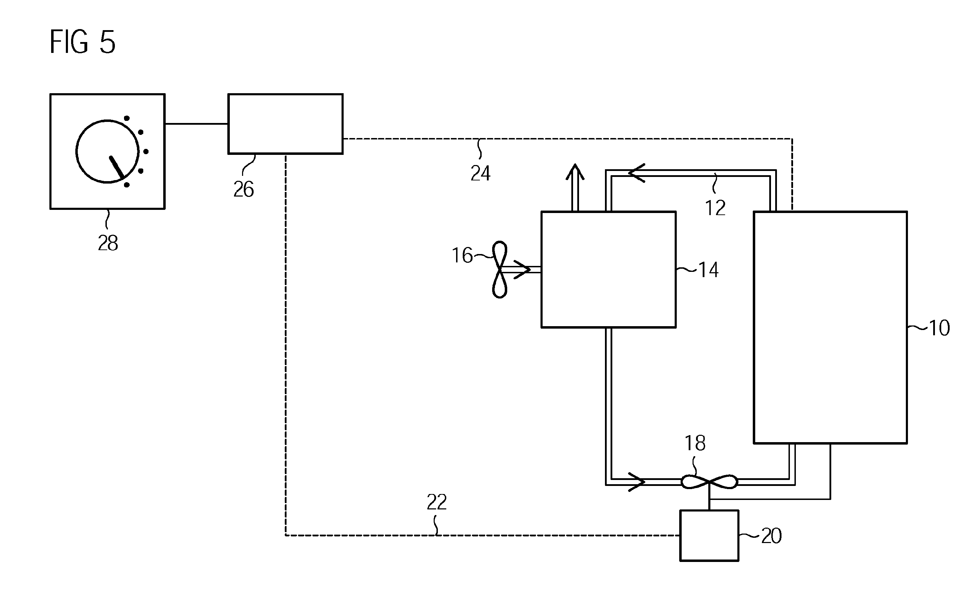

FIG 5 illustrates a schematic diagram of a first embodiment of the laundry dryer with an air-to-air condenser 14 according to the present invention.

The laundry dryer comprises a closed air stream circuit 12 formed by the laundry drum 10, the air-to-air condenser 14, the air stream fan 18 and a condenser fan 16. The air-to-air condenser 14 is an air-to-air heat exchanger and forms a thermal interconnection between the air stream circuit 12 and the ambient air. The air-to-air condenser 14 includes two separate channels. A first channel is provided for the air stream of the air stream circuit 12. A second channel is provided for the ambient air. The ambient air is blown through the second channel by the condenser fan 16.

Further, the laundry dryer comprises the motor 20, the control unit 26 and the user interface 28. The motor 20 is connected to the control unit 26 by a motor control line 22. The air stream fan 18 and the laundry drum 10 are driven by the motor 20. The rotation speed of the air stream fan 18 is proportional to the rotation speed of the laundry drum 10. For example, the air stream fan 18 is directly driven by the motor 20, while the laundry drum 10 is indirectly driven by the motor 20 via a belt. A detection line 24 connects the control unit 26 to a detection device in or at the laundry drum 10.

The air-to-air condenser 14 cools down and dehumidifies the air stream by ambient air, after the air stream has passed the laundry drum 10. Then, the air stream is heated up by a heating device, for example by an electric heating element, before the air stream is re-inserted into the laundry drum 10 again. Said heating device is not shown. The air stream is driven by the air stream fan 18 arranged preferably, but not necessarily between the air-to air condenser 14 and the laundry drum 10.

The detection device in or at the laundry drum 10 is provided for detecting the amount of load 1 inside the laundry drum 10. If the detection device and the control unit 26 estimate a reduced load in the laundry drum 10, which is lower than the maximum load of said laundry drum 10, then the control unit 26 sets the motor 20 and thereby the air stream fan 18 and the laundry drum 10 to a rotation speed v higher than the rotation speed v2 for the maximum load. Preferably, the estimation of the load 1 in the laundry drum 10 is performed in the beginning of the drying cycle.

The amount of load 1 in the laundry drum 10 may be further detected by the temperature difference of the air stream between an inlet and outlet of the laundry drum 10. The temperature difference of the inlet and outlet of the laundry drum 10 is related to the amount of water extracted from the laundry and decreases in the case of a small heat exchange between the air stream and the laundry. In a similar way, the amount of load 1 in the laundry drum 10 may be detected by the temperature difference of the air stream between an inlet and outlet of the air-to-air condenser 14. This temperature difference is also related to the amount of water extracted from the laundry. However, the temperature difference between the inlet and outlet of the air-to-air condenser 14 increases in the case of a small heat exchange between the air stream and the laundry.

Further, also the temperature of the air stream at the outlet of the laundry drum 10 can be used alone for estimating the amount of load 1 in the laundry drum 10

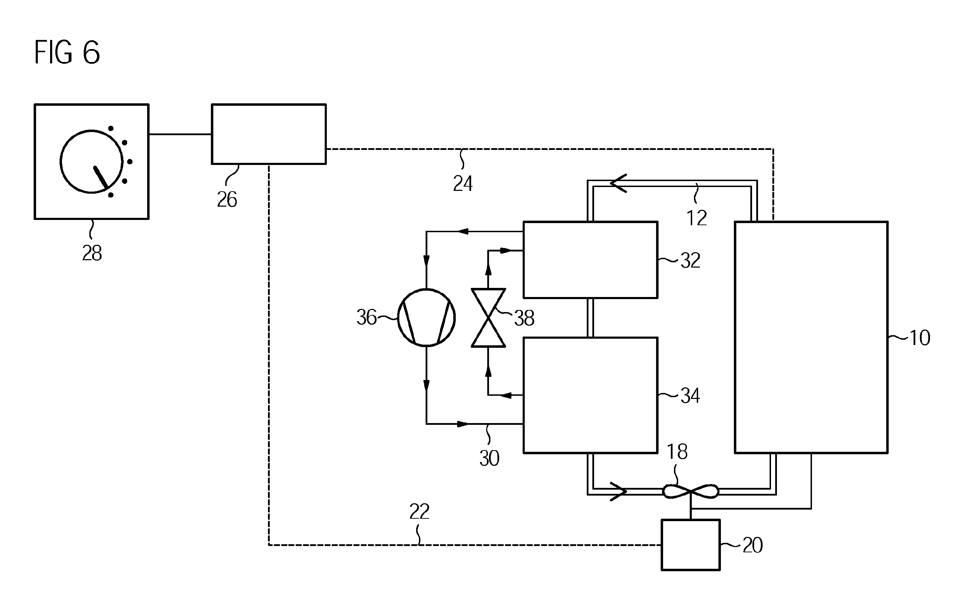

FIG 6 illustrates a schematic diagram of a first embodiment of the laundry dryer with a heat pump system according to the present invention.

The heat pump system comprises an air stream circuit 12, Preferably closed, and a closed refrigerant circuit 30. The air stream circuit is formed by the laundry drum 10, an evaporator or gas heater 32, a condenser or gas cooler 34 and the air stream fan 18. The refrigerant circuit 30 is formed by a compressor 36, the condenser 34, an expansion device 38 and the evaporator 32. For example, the expansion device 38 is an expansion valve. The evaporator 32 and the condenser 34 are heat exchangers and form the thermal interconnections between the air stream circuit 12 and the refrigerant circuit 30.

Further, the heat pump system comprises the motor 20, the control unit 26 and the user interface 28. The motor 20 is connected to the control unit 26 by the motor control line 22. The air stream fan 18 and the laundry drum 10 are driven by the motor 20. The detection device for detecting the amount of laundry is connected to the control unit 26 by the detection line 24.

In the air stream circuit 12, the evaporator 32 cools down and dehumidifies the air stream, after the air stream has passed the laundry drum 10. Then, the condenser 34 heats up the air stream, before the air stream is re-inserted into the laundry drum 10 again. The air stream is driven by the air stream fan 18 arranged preferably, but not necessarily between the condenser 34 and the laundry drum 10. In the refrigerant circuit 30, a refrigerant is compressed and heated up by the compressor 36, cooled down and condensed in the condenser 34, laminated in the expansion device 38 and then vaporised and heated up in the evaporator 32.

The detection device, the detection line 24 and the control unit 26 are provided for estimating the amount of load 1 inside the laundry drum 10. In dependence of the amount of the load the rotation speed v of the motor 20 and thereby the rotation speed of the air stream fan 18 and the laundry drum 10 are controlled by the control unit 26. The rotation speed of the air stream fan 18 is proportional to the rotation speed of the laundry drum 10. For example, the air stream fan 18 is directly driven by the motor 20, while the laundry drum 10 is indirectly driven by the motor 20 via a belt. If the reduced load in the laundry drum 10 is estimated, which is lower than the maximum load of said laundry drum 10, then the control unit 26 sets the motor 20 and thereby the air stream fan 18 and the laundry drum 10 to a rotation speed v higher than the rotation speed v2 for the maximum load. Preferably, the estimation of the load in the laundry drum 10 is performed at the beginning of the drying cycle.

The amount of load 1 in the laundry drum 10 may be also estimated by the temperature difference of the air stream between an inlet and outlet of the laundry drum 10. The temperature difference of the inlet and outlet of the laundry drum 10 is related to the amount of water extracted from the laundry and decreases in the case of a small heat exchange between the air stream and the laundry. In a similar way, the amount of load 1 in the laundry drum 10 may be estimated by the temperature difference of the air stream between an inlet and outlet of the evaporator 32. This temperature difference is also related to the amount of water extracted from the laundry. However, the temperature difference between the inlet and outlet of the evaporator 32 increases in the case of a small heat exchange between the air stream and the laundry.

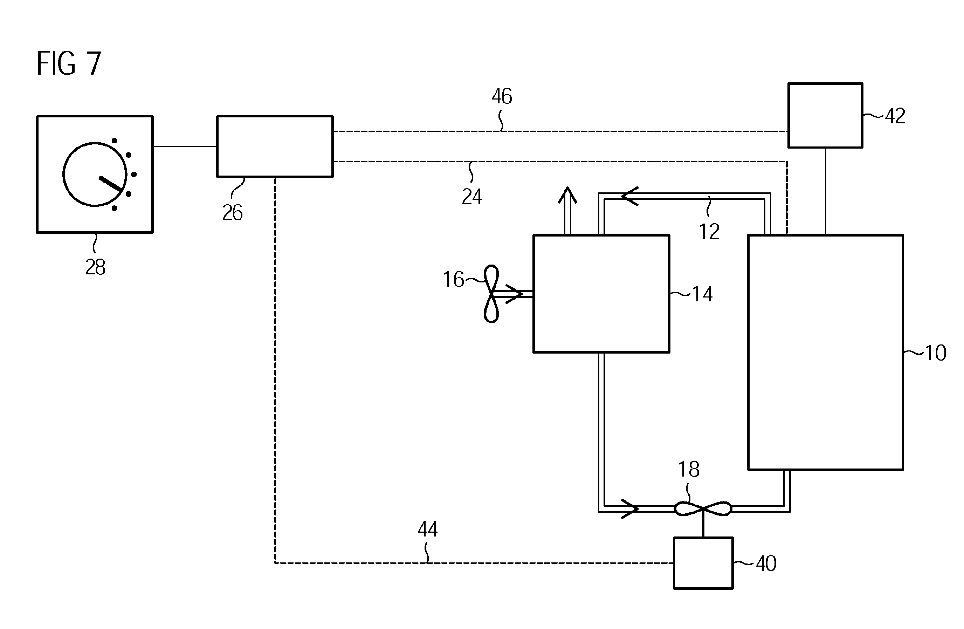

FIG 7 illustrates a schematic diagram of a second embodiment of the laundry dryer with the air-to-air condenser 14 according to the present invention.

The laundry dryer with the air-to-air condenser 14 of the second embodiment comprises substantially the same components as the laundry dryer with the air-to-air condenser 14 of the first embodiment in FIG 5. Instead of the motor 20 for driving the air stream fan 18 and the laundry drum 10, the second embodiment comprises the fan motor 40 and the drum motor 42. The fan motor 40 is provided for driving the air stream fan 18. The drum motor 42 is provided for driving the laundry drum 10. Instead of the motor control line 22 in FIG 5, the second embodiment comprises a fan control line 44 and a drum control line 46. The fan control line 44 connects the control unit 26 to the fan motor 40. In a similar way, the drum control line 46 connects the control unit 26 to the drum motor 42.

If the reduced load in the laundry drum 10 is detected or estimated, which is lower than the maximum load of said laundry drum 10, then the control unit 26 sets the drum motor 42 and thereby the laundry drum 10 to a rotation speed v higher than the rotation speed v2 for the maximum load. Preferably, the detection and/or estimation of the load in the laundry drum 10 are performed in the beginning of the drying cycle.

In the second embodiment of the laundry dryer 10 with the air-to-air condenser 14 in FIG 7, the rotation speeds of the air stream fan 18 and of the laundry drum 10 are independent of each other.

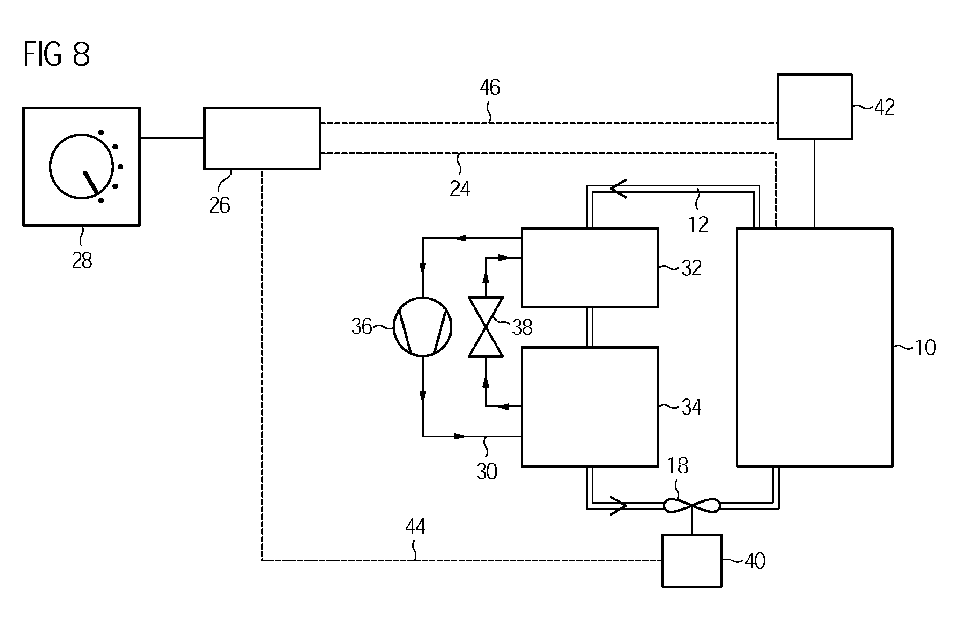

FIG 8 illustrates a schematic diagram of a second embodiment of the laundry dryer with the heat pump system according to the present invention.

The heat pump system for the laundry dryer of the second embodiment comprises substantially the same components as the first embodiment with the heat pump system in FIG 6. Instead of the motor 20 for driving the air stream fan 18 and the laundry drum 10, the second embodiment comprises the fan motor 40 for driving the air stream fan 18 and the drum motor 42 for driving the laundry drum 10. Instead of the motor control line 22, the second embodiment comprises a fan control line 44 and a drum control line 46. The fan control line 44 connects the control unit 26 to the fan motor 40. In a similar way, the drum control line 46 connects the control unit 26 to the drum motor 42.

If the reduced load in the laundry drum 10 is detected and/or estimated, which is lower than the maximum load of said laundry drum 10, then the control unit 26 sets the drum motor 42 and thereby the laundry drum 10 to a rotation speed higher than the rotation speed for the maximum load. Preferably, the estimation of the load in the laundry drum 10 is performed in the beginning of the drying cycle.

In the second embodiment of the laundry dryer with the heat pump system shown in FIG 8, the rotation speed of the air stream fan 18 and the rotation speed of the laundry drum 10 are independent of each other.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: laundry drum
- 12: air stream circuit
- 14: air-to-air condenser
- 16: ambient air fan
- 18: air stream fan
- 20: motor
- 22: motor control line
- 24: detection line
- 26: control unit
- 28: user interface
- 30: refrigerant circuit
- 32: evaporator
- 34: condenser
- 36: compressor
- 38: expansion device
- 40: fan motor
- 42: drum motor
- 44: fan control line
- 46: drum control line

- v: rotation speed of the laundry drum
- v1: upper rotation speed
- v2: lower rotation speed
- t: time
- 1: load, amount of load
- tl: threshold value
- hl: half load
- fl: full load, maximum load

## Claims

1. A method for controlling the rotation speed (v) of a laundry drum (10) in a laundry dryer (10), comprising the steps of:
- determining an amount of load (1) in the laundry drum (12), and
- controlling the rotation speed (v) of the laundry drum (10) in dependence of the detected and/or estimated amount of load (1) in said laundry drum (12),
- so that in case of a first amount of load (1) the rotation speed (v) of the laundry drum (10) is set to a first rotation speed (v1) and in case of a second amount of load (1) the rotation speed (v) of the laundry drum (10) is set to a second rotation speed (v2),
- wherein the first amount of load (1) is smaller than the second amount of load (1) and the first rotation speed (v1) is higher than the second rotation speed (v2).

2. The method according to claim 1,
**characterized in, that**
at least one predetermined threshold value (tl, fl, hl) for the amount of load (1) is defined, wherein above said threshold value (tl, fl) the rotation speed (v) of the laundry drum (10) is set to the second rotation speed (v2) and below said threshold value (tl, hl) the rotation speed (v) of the laundry drum (10) is set to the first rotation speed (v1).

3. The method according to claim 1,
**characterized in, that**
a predetermined first threshold value (fl) and second threshold value (hl) are defined, wherein the rotation speed (v) of the laundry drum (10) is set to the first rotation speed (v1), if the amount of load (1) is equal as or smaller than the first threshold value (hl), and wherein the rotation speed (v) of the laundry drum (10) is set to the second rotation speed (v2), if the amount of load (1) is equal as or bigger than the second threshold value (fl).

4. The method according to claim 1,
**characterized in, that**
a predetermined first threshold value (fl) and second threshold value (hl) are defined, wherein if the amount of load is between the first threshold value (hl) and the second threshold value (hl), then the rotation speed (v) of the laundry drum (10) is a defined function of the amount of load, wherein the rotation speed (v) decreases with an increasing amount of load (1).

5. The method according to claim 1 or 4,
**characterized in, that**
the rotation speed (v) decreases linearly with an increasing amount of load (1) according to the defined function.

6. The method according to any one of the preceding claims,
**characterized in, that**
the current rotation speed of the laundry drum (10) oscillates around the value of the activated rotation speed (v, v1, v2).

7. The method according to any one of the claims 1 to 5,
**characterized in, that**
the current rotation speed of the laundry drum (10) oscillates between zero and the value of the activated rotation speed (v, v1, v2).

8. The method according to any one of the preceding claims,
**characterized in, that**
the laundry drum (10) changes periodically its direction of rotation during the drying cycle.

9. The method according to any one of the preceding claims,
**characterized in, that**
the upper rotation speed (v1) is between 45 rpm and 65 rpm, in particular 55 rpm, and the lower rotation speed (v2) is between 10 rpm and 20 rpm, in particular 20 rpm.

10. A laundry dryer with a rotating laundry drum (10), wherein:
- the laundry dryer comprises a detection device for detecting an amount of load (1) inside the laundry drum (10) or for detecting one or more parameters correlating with the amount of load (1) inside the laundry drum (10),
- the laundry dryer comprises a control unit (26) for estimating the amount of load (1) inside the laundry drum (10),
- the control unit (26) is provided for controlling a rotation speed (v) of the laundry drum (10) in dependence of the amount of load (1) inside the laundry drum (10),
- so that in case of a first amount of load (1) the rotation speed (v) of the laundry drum (10) is set to a first rotation speed (v1) and in case of a second amount of load (1) the rotation speed (v) of the laundry drum (10) is set to a second rotation speed (v2),
- wherein the first amount of load (1) is smaller than the second amount of load (1) and the first rotation speed (v1) is higher than the second rotation speed (v2).

11. The laundry dryer according to claim 10,
**characterized in, that**
the laundry dryer comprises a user interface (28) connected to the control unit (26), wherein said user interface (28) is provided for selecting the amount of load (1) by the user.

12. The laundry dryer according to claim 10 or 11,
**characterized in, that**
the detection device comprises a conductometric system including at least two electrodes inside the laundry drum (10), wherein said electrodes are provided for detecting the electric resistance and/or conductivity of wet laundry.

13. The laundry dryer according to claim 12,
**characterized in, that**
the control unit (26) is provided for estimating the amount of load (1) from the electric resistance and/or conductivity of the wet laundry.

14. The laundry dryer according to any one of the claims 10 to 13,
**characterized in, that**
the control unit (26) is provided for controlling a rotation speed of an air stream fan (18).

15. The laundry dryer according to any one of the claims 10 to 14,
**characterized in, that**
the laundry dryer is provided for a method according to any one of the claims 1 to 9.
